Europäisches Patentamt

European Patent Office

Office européen des brevets

(11) Numéro de publication: **0 307 330**
**A2**

# DEMANDE DE BREVET EUROPEEN

(21) Numéro de dépôt: 88420307.6

(22) Date de dépôt: 09.09.88

(51) Int. Cl.⁴: **C 09 J 3/14**
C 08 L 53/00, C 08 L 57/00

(30) Priorité: 10.09.87 FR 8712994

(43) Date de publication de la demande:
15.03.89 Bulletin 89/11

(84) Etats contractants désignés:
AT BE CH DE ES FR GB GR IT LI LU NL SE

(71) Demandeur: "NATIONAL STARCH & CHEMICAL SA"
SOCIETE ANONYME DITE
Zone Industrielle Nord Rue Grange Morin
F-69400 Villefranche (FR)

(72) Inventeur: Dupuis, Jean-Claude
6 route de Reyrieux
F-01600 Trevoux (FR)

Givord, Roland
112 rue Molière
F-69400 Villefranche (FR)

(74) Mandataire: Maureau, Philippe et al
Cabinet Germain & Maureau Le Britannia - Tour C 20, bld
Eugène Déruelle Boîte Postale 3011
F-69392 Lyon Cédex 03 (FR)

(54) Colles thermoréactivables dépourvues de pouvoir collant instantané résiduel, prévues pour le collage d'éléments élastiques.

(57) Ces colles sont choisies parmi les résines de type polycliques hydrogénées, aliphatiques modifiées hydrogénées ou non, ou terpènes phénoliques hydrogénées, seules ou en mélange, présentant un point de fusion entre 60 et 140°C, parfaitement compatibles à toutes températures avec le caoutchouc et en ce que le mélange caoutchouc-résine comporte une cire de paraffine naturelle ou synthétique à point de fusion compris entre 50 et 70°C.

Ces colles trouvent des applications intéressantes dans le collage d'éléments élastiques.

## Description

## COLLES THERMOREACTIVABLES DEPOURVUES DE POUVOIR COLLANT INSTANTANE RESIDUEL, PREVUES POUR LE COLLAGE D'ELEMENTS ELASTIQUES

La présente invention concerne des colles thermoréactivables dépourvues de pouvoir collant instantané résiduel prévues pour le collage d'éléments élastiques.

La fabrication de nombreux articles jetables, tels que :
- les sous-vêtements (par exemple, chaussettes, slips ou autres),
- les produits d'hygiène type changes bébé, changes adulte, etc...,
- les produits d'hygiène féminine (protections périodiques par exemple);
- les produits d'hygiène chirurgicale (champs opératoires, masques, chaussons, etc...) ;
- les articles de protection (vêtements jetables, combinaisons de travail...),
comporte généralement une étape d'incorporation d'éléments élastiques.

Au cours de cette étape, les éléments élastiques sont enduits avec de la colle projetée à l'aide d'un pistolet ou déposée par râcle, ceci sur la machine, juste avant le contact avec le support des élastiques, qui est le plus souvent un film de matière plastique ou un non-tissé.

Ces éléments élastiques peuvent présenter différentes compositions :
- élastiques à base de caoutchouc naturel : film d'épaisseur 300 à 100 microns ou brins ronds ; ces élastiques sont généralement talqués ;
- élastiques à base de caoutchouc polyuréthane : épaisseur 100 à 20 microns ou brins ronds ou film de mousse polyuréthane.

Ils sont appliqués par collage sur des matériaux tels que :
- des films de polyéthylène basse densité à texture plus ou moins gaufrée avec un degré de traitement variable (< 48 dynes/cm).
- des voiles de non-tissés viscose, polypropylène ou polyester de 20 à 10 g/m², réalisés avec les techniques classiques (liage en filature, ou spun-bonded, thermoliage...).
- des papiers, ouate de cellulose...

Dans l'état actuel de la technique, le collage de ces éléments élastiques sur les supports destinés à les recevoir est effectué à l'aide de colles fusibles, sensibles à la pression ou présentant un pouvoir collant instantané (tack) résiduel plus ou moins important ; ces colles sont à base de copolymères éthylène vinyle acétate ou de copolymères de styrène (caoutchoucs séquencés) en mélange avec des résines dites "tackifiantes", type C5, esters de colophane, hydrocarbures aliphatiques et aromatiques et renfermant, en outre, des plastifiants de type huile naphténique ou aromatique.

Ces colles sont appliquées sur l'élastique au moment du collage, sur la machine fabriquant les articles, soit par enduction de la colle sur l'élastique tendu à extension variable : 30 à 300 %, soit par projection, soit par contact râclant, la température d'application étant de 120 à 190°C.

Le grammage de colle déposée est de 50 à 300 g/m².

Le temps ouvert inférieur à 1/2 seconde, avant mise en contact avec le deuxième support.

On effectue ensuite un pressage à l'aide d'un cylindre (parfois refroidisseur) et de molettes situées le long du parcours.

Dans certains cas, la colle n'est pas enduite sur l'élastique, mais sur l'autre support (film ou non-tissé), les autres conditions restant identiques.

L'utilisation de colles fusibles sensibles à la pression ou à "tack" résiduel présente pourtant certains inconvénients :

1/ Le conditionnement habituel de ces produits (barquettes de papier siliconé) est peu pratique à manipuler et provoque de nombreux déchets.

2/ En cas de traversée de la colle fondue, au travers des non-tissés ou de débordement sur le côté des élastiques, il y a encrassement des machines par une colle qui reste collante en permanence. Il peut également y avoir, lors du pliage de l'article, collage indésirable de deux parties de cet article.

3/ Ces colles fusibles ont tendance à fluer à température modérée (40 à 50°C). Il peut donc y avoir glissement des élastiques sous tension, soit pendant le refroidissement de la colle, soit lors du stockage de l'article.

Il serait donc très souhaitable de pouvoir disposer de colles sans "tack" résiduel à température ambiante.

Des colles fusibles sans tack résiduel sont couramment employées pour le collage du papier (emballage, brochage de livres...), du bois (collage de chants...), des matières plastiques et de très nombreux autres supports.

Aucune de ces colles n'a poutant permis d'effectuer de façon satisfaisante le collage des éléments élastiques.

On entend par collage satisfaisant des collages qui conservent la souplesse et l'élasticité de l'élastique et qui ne fluent pas à température modérée (50-60°C).

Les Inventeurs se sont donc tout d'abord donné pour but de mettre au point les critères auxquels devrait satisfaire une colle sans tack résiduel pour pouvoir assurer ce collage avec la même efficacité que les colles fusibles sensibles à la pression actuellement existantes.

Au cours de nombreux essais effectués sur des colles essentiellement composées d'un mélange de caoutchouc synthétique type copolymère styrène-butadiène-styrène (SBS) styrène-isoprène-styrène (SIS) ou styrène-éthylène-butylène-styrène (SEBS) et de différentes résines dites "tackifiantes", ils ont pu, tout d'abord, déterminer qu'il était fondamental que ces résines présentent une parfaite compatibilité, à toutes températures, avec l'élastomère ; cette compatibilité peut être estimée par examen de la transparence du mélange (point de trouble inférieur à la température ambiante) aussi bien que par la souplesse du mélange élastomère-résine obtenu.

Il faut aussi que le mélange élastomère-résine présente un très bon pouvoir collant instantané, sans tack résiduel bien évidemment, ainsi qu'une parfaite aptitude au mouillage des éléments élastiques dont il doit assurer le collage, et tout spécialement des éléments élastiques talqués.

Il faut enfin que le mélange comporte un plastifiant à chaud de la phase élastomère, tel que l'on puisse faire varier aussi bien le pouvoir collant instantané à chaud de la colle que les possibilités de fluage à chaud, à température modérée des collages.

Ces différentes exigences sont satisfaites par l'utilisation de résines type polycyliques hydrogénées, aliphatiques modifiées hydrogénées ou non (la modification pouvant être aromatique, phénol, .ester...) ou terpènes phénoliques hydrogénées, seules ou en mélange, présentant un point de fusion entre 60 et 140°C.

Ces résines sont utilisées en mélange avec un caoutchouc séquencé de type SBS, SIS ou SEBS, linéaire ou ramifié, à pourcentage de styrène compris entre 10 et 50 %.

La teneur en caoutchouc de la colle peut varier de 10 à 50 % selon la viscosité et les propriétés mécaniques désirées. Les meilleurs résultats sont obtenus avec 20 à 35 % de caoutchouc.

La teneur en résine de la colle peut varier de 30 à 80 %. Les meilleurs résultats sont obtenus avec 45 à 65 % de résine.

Le mélange comporte avantageusement un troisième constituant qui est une cire de paraffine, naturelle ou synthétique, à point de fusion compris entre 50 et 70°C agissant comme plastifiant à chaud de la phase élastomère du caoutchouc. Le choix du point de fusion de la paraffine permet de faire varier aussi bien le tack à chaud de la colle que les possibilités de fluage à température modérée des collages. La teneur en paraffine varie de 5 à 35 %, ou mieux de 15 à 25 %.

L'ensemble des constituants est protégé de l'oxydation par des anti-oxydants adaptés.

Il est bien évident que, sans sortir du cadre de l'invention, on pourra ajouter au mélange des résines à fonction renforçante (généralement du type aromatique) compatibles avec la phase styrène des polymères, soit des cires de polyéthylène, modifiées ou non, pour améliorer la cohésion à chaud, soit éventuellement un faible pourcentage de produits à fonction plastifiante (tels que huiles aromatiques, naphténiques..., résines liquides à bas point de fusion (aliphatiques, terpéniques...) polymères à bas poids moléculaire, ceci pour améliorer la souplesse à froid ainsi que l'adhésivité sur les supports, du fait de leur compatibilité avec l'une ou les deux phases des polymères, ce dernier pourcentage devant, bien entendu, être déterminé de façon à ne pas communiquer un tack résiduel à température ambiante.

La présente invention sera mieux comprise à l'aide des exemples qui suivent qui l'illustrent sans nullement la limiter.

Sauf autrement précisé, les pourcentages sont donnés en poids.

## Exemple 1

On prépare une colle de formule classique, sans tack résiduel, utilisée pour coller le polyéthylène sur du polyéthylène-téréphtalate lors de la fabrication de bouteilles en polyéthylène-téréphtalate (PET).

On mélange les éléments suivants :
- Caoutchouc séquencé SBS à 28 % en styrène du type commercialisé par la Socité Shell sous la dénomination CARIFLEX TR 1102    25,0 %
- Ester glycérique de colophane, du type commercialisé par la Société DRT sous la dénomination DERTOLINE G    52,5 %
- Cire microcristalline du type commercialisé par la Société MOBIL OIL sous la dénomination MOBILWAX 2360    22,0 %
- Antioxydant    0,5 %

On obtient une colle fusible de viscosité 6 500 mPa.s à 175°C et avec un point de ramollissement de 80°C. Cette colle ne présente pratiquement pas d'adhérence sur les éléments élastiques et ne saurait donc convenir à leur collage.

## Exemple 2

On prépare une colle de formule classique destinée au collage du papier lors du brochage des livres et revues en mélangeant les éléments suivants :
- Caoutchouc séquencé SBS à 28 % en styrène du type commercialisé par la la Société Shell sous la dénomination CARIFLEX TR 1102    30,0 %
- Ester glycérique de colophane polymérisée, du type commercialisé par la Société DRT sous la dénomination DERTOPOLINE G    50,0 %
- Résine aliphatique du type commercialisé par la Société Exxon Chemical sous la dénomination ESCOREZ 1304    9,5 %
- Paraffine 58-60    10,0 %
- Antioxydant    0,5 %

On obtient une colle fusible de viscosité 7 500 mPa.s à 175°C et avec un point de ramollissement de 65°C. Cette colle ne présente pratiquement pas d'adhérence sur les éléments élastiques et ne saurait donc convenir à leur collage.

Les exemples 3 à 6 vont décrire des colles selon l'invention.

## Exemple 3

On mélange les éléments suivants :
- Caoutchouc séquencé SBS à 28 % en styrène du type commercialisé par la Société Shell sous la dénomination CARIFLEX TR 1102    20,0
- Résine polycyclique hydrogénée coupe en C5-point de fusion 100°C du type commercialisé par la Société Exxon sous la dénomination ESCOREZ 5 300    59,5 %
- Paraffine 58-60    20,0%
- Antioxydant    0,5 %

La colle obtenue présente une viscosité de 1 700 mPa.s à 175°C et un point de ramollissement de 65°C, et dépourvue de tout tack résiduel et se révèle très satisfaisante pour le collage des éléments élastiques.

### Exemple 4

On mélange les éléments suivants :
- Caoutchouc séquencé SBS à 28 % en styrène du type commercialisé par la Société Shell sous la dénomination CARIFLEX TR 1102   30,0 %
- Résine aliphatique modifiée aromatique (point de fusion : 100°C) du type commercialisée par la Société Exxon Chemical sous la dénomination ESCOREZ 4401   50,0 %
- Paraffine 62-64   10,5 %
- Antioxydant   0,5 %

La colle obtenue présente une viscosité de 4 200 mPa.s à 175°C et un point de ramolissement de 82°C ; elle est dépourvue de tout tack résiduel et donne entière satisfaction pour le collage des éléments élastiques.

### Exemple 5

On mélange les éléments suivants :
- Caoutchouc séquence SBS à 38 % en styrène du type commercialisé par la Société Shell sous la dénomination CARIFLEX KX 138   30,0 %
- Résine terpénique phénolique hydrogénée point de fusion 100°C, du type commercialisé par la Société DRT sous la dénomination DERTOPHENE TH   30,0 %
- Résine aliphatique modifiée aromatique (point de fusion : 100°C) du type commercialisée par la Société Exxon Chemical sous la dénomination ESCOREZ 4401   25,0 %
- Paraffine 62-64   24,5%
- Antioxydant   0,5 %

La colle obtenue présente une viscosité de 4 700 mPa.s à 175°C et un point de ramolissement de 85°C ; elle est dépourvue de tout tack résiduel et donne entière satisfaction pour le collage des éléments élastiques.

Pour toutes les formules de colles décrites dans les exemples 3 à 6, les résines utilisées (polycyliques hydrogénés, aliphatiques modifiées, hydrogénées ou non, terpènes phénoliques hydrogénées)) présentent une excellente compatibilité, à toutes températures, avec la phase élastomère des caoutchoucs.

Elles présentent un très fort pouvoir collant instantané à chaud, et communiquent une grande souplesse à température ambiante, cristallisent à une température moyenne (50-70°C) et plastifient le caoutchouc à chaud.

Toutes ces propriétés permettent d'obtenir des collages d'éléments élastiques qui satisfont aux contraintes qui leur sont imposées.

Ces colles peuvent être utilisées comme les colles fusibles à tack résiduel sur les mêmes machines et dans des conditions similaires (température, dépôt, etc...)

Dans ce cas, elles offrent les avantages suivants :
- manipulation plus aisée (présentation en granulés non collants),
- moindre encrassement des machines, puisque les bavures de colle (ou les traversées de non tissé) ne restent pas adhésives ;
- pas de collage indésirable de l'article au pliage en cas de bavure ou de traversée du non tissé ;
- prise de la colle plus rapide, qui empêche le fluage des élastiques pendant le refroidissement ;
- meilleure tenue à la chaleur lors du stockage des articles collés (50-70°C au lieu de 40-50°C).

Ces colles permettent également de modifier la technique de collage des élastiques et ceci constitue un avantage important.

C'est ainsi que l'on peut procéder à une enduction préalable de l'élastique à raison de 30 à 100 g/m², sur une ou deux faces, par exemple chez le producteur de l'élastique.

Cette enduction thermocollante, non sensible à la pression, permet à l'élastique d'être livré en vrac dans des emballages sans risque de réagglomération.

Chez l'utilisateur de l'élastique, après extension de l'élastique dans les conditions désirées, ils suffit de réactiver la colle par tout moyen de chauffage (air chaud, infra rouge, etc...).

L'enduction thermocollante sera réactivée entre 120 et 190°C, un excès de température ne pouvant qu'améliorer la mouillabilité de la colle sur le polyéthylène. Le contact avec le polyéthylène doit être assuré rapidement, car l'enduction se rigidifie très vite ; en conséquence, la distance entre la fin de la réactivation et le contact devra être inférieure à 10 cm. De plus, pour assurer un parfait collage, le contact entre le polyéthylène et l'élastique devra être assuré par un pressage suffisant. On a ainsi une vitesse de prise et de rigidification plus rapide.

Il est, bien entendu, possible de ne réchauffer que la zone de l'élastique que l'on désire coller.

Aux avantages précédemment éconcés s'ajoute celui de pouvoir simplifier les machines de fabrication d'articles à élastiques en supprimant un poste d'enduction de colle fusible et surtout la certitude d'avoir une enduction de colle sur toute la surface de l'élastique.

Enfin, la même colle fusible, déposée préalablement en couche mince (10 à 30 g/m²) peut faire office de primaire d'adhérence.

Dans ce cas, l'élastique enduit pourra être collé avec un grand nombre de colles fusibles actuellement commercialisées.

En particulier, les machines utilisant déjà une autre colle fusible pour un autre collage que celui des élastiques pourront dans bien des cas utiliser cette même colle pour le collage des élastiques enduits.

Par exemple, les machines fabriquant des changes pour bébés utilisent une colle fusible pour le collage film de PE/non tissé. Cette même colle pourrait servir au collage des élastiques enduits.

Il en résulte, en plus, des avantages déjà cités :
- une simplification de la machine (utilisation d'un seul fondoir à colle),
- une diminution des risques d'erreur de colle.

## Revendications

1- Colles thermoréactivables dépourvues de pouvoir collant instantané résiduel composées d'un mélange de caoutchouc synthétique séquencé de type SBS, SIS ou SEBS, linéaire ou ramifié, à pourcentage de styrène compris entre 10 et 50% et de résine, caractérisées en ce que les résines sont choisies parmi les résines de type polycycliques hydrogénées, aliphatiques modifiées hydrogénées ou non, ou terpènes phénoliques hydrogénées, seules ou en mélange, présentant un point de fusion entre 60 et 140°C, parfaitement compatibles à toutes températures avec le caoutchouc et en ce que le mélange caoutchouc-résine comporte une cire de paraffine naturelle ou synthétique à point de fusion compris entre 50 et 70°C.

2- Colles selon la revendication 1, caractérisées en ce que la teneur en caoutchouc se situe entre 10 et 50 % en poids.

3- Colles selon la revendication 2, caractérisées en ce que la teneur en caoutchouc se situe entre 20 et 35 % en poids.

4- Colles selon l'une quelconque des revendications 1 à 3, caractérisées en ce que la teneur en résine se situe entre 30 à 80 % en poids.

5- Colles selon la revendication 4, caractérisées en ce que la teneur en résine se situe entre 45 et 65 % en poids.

6- Colles selon l'une des revendications 1 à 5, caractérisées en ce que la teneur en cire de paraffine se situe entre 5 et 35 % en poids.

7- Colles selon la revendication 6, caractérisées en ce que la teneur en cire de paraffine se situe entre 15 et 25 % en poids.

8- Application de la colle selon l'une des revendications 1 à 7 au collage d'éléments élastiques.